(19) Europäisches Patentamt / European Patent Office / Office européen des brevets

(11) **EP 1 802 412 B1**

(12) **EUROPÄISCHE PATENTSCHRIFT**

(45) Veröffentlichungstag und Bekanntmachung des Hinweises auf die Patenterteilung:
**13.11.2013  Patentblatt 2013/46**

(21) Anmeldenummer: 05788693.9

(22) Anmeldetag: **24.09.2005**

(51) Int Cl.:
*B22F 1/00* (2006.01)   *B22F 9/02* (2006.01)
*C22B 5/04* (2006.01)   *C22B 9/00* (2006.01)
*C22B 34/24* (2006.01)   *H01G 9/00* (2006.01)

(86) Internationale Anmeldenummer:
**PCT/EP2005/010362**

(87) Internationale Veröffentlichungsnummer:
**WO 2006/039999 (20.04.2006 Gazette 2006/16)**

(54) **VERFAHREN ZUR HERSTELLUNG VON VENTILMETALLPULVERN**

METHOD FOR THE PRODUCTION OF VALVE METAL POWDERS

PROCEDE POUR PRODUIRE DES POUDRES DE METAUX VALVES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.10.2004  DE 102004049039**

(43) Veröffentlichungstag der Anmeldung:
**04.07.2007  Patentblatt 2007/27**

(60) Teilanmeldung:
**10180119.9 / 2 292 355**

(73) Patentinhaber: **H.C. Starck GmbH 38642 Goslar (DE)**

(72) Erfinder:
• **HAAS, Helmut
  38315 Schladen (DE)**
• **BARTMANN, Ulrich
  38640 Goslar (DE)**
• **SCHNITTER, Christoph
  31188 Holle (DE)**
• **DROSTE, Elisabeth
  38640 Goslar (DE)**

(56) Entgegenhaltungen:
US-A- 4 722 756     US-A- 6 051 326
US-A1- 2002 050 185     US-B1- 6 558 447

**Beschreibung**

Die vorliegende Erfindung betrifft ein Verfahren zur Herstellung von Ventilmetallpulvern hoher spezifischer Oberfläche aus den entsprechenden Primärpulvern mittels reduzierender Metalle und/oder Metallhydride und insbesondere ein Verfahren zur Herstellung von Tantalpulvern, das als Anodenmaterial für Elektrolytkondensatoren hoher spezifischer Kapazität geeignet ist

Als reduzierende Metalle geeignet sind Magnesium, Calcium, Barium und/oder Lanthan und/oder deren Hydride, insbesondere Magnesium.

Erfindungsgemäß werden als Primärpulver feinteilige Pulver aus Titan, Zirkon, Hafnium, Vanadium, Niob, Tantal, Molybdän und/ oder Wolfram, vorzugsweise von Niob und/oder Tantal, eingesetzt, insbesondere Tantalpulver.

Die Erfindung wird nachfolgend insbesondere in Bezug auf die Herstellung von Tantalpulvern für die Herstellung von Kondensatoren beschrieben.

Als Festelektrolytkondensatoren mit sehr großer aktiver Kondensatorfläche und daher kleiner, für die mobile Kommunikationselektronik geeigneter Bauweise werden überwiegend solche mit einer auf einem entsprechenden leitfähigen Träger aufgebrachten Niob- bzw. Tantalpentoxidsperrschicht eingesetzt unter Nutzung von deren Stabilität ("Ventilmetall"), der vergleichsweise hohen Dielektrizitätskonstanten und der über die elektrochemische Erzeugung mit sehr gleichmäßiger Schichtdicke herstellbaren isolierenden Pentoxidschicht. Als Träger werden metallische Vorläufer der entsprechenden Pentoxide eingesetzt. Der Träger, der zugleich die eine Kondensatorelektrode (Anode) darstellt, besteht aus einer hochporösen, schwammartigen Struktur, die durch Versintern feinstteiliger Primärstrukturen bzw. bereits schwammartiger Sekundärstrukturen hergestellt wird. Die Oberfläche der Trägerstruktur wird elektrolytisch zum Pentoxid oxidiert ("formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird oder mit einem flüssigen Vorläufer eines Polymerelektrolyten und Polymerisation erzeugt; bei den so erhältlichen leitfähigen Polymeren handelt es sich meist um Polypyrrole, Polyaniline oder Polythiophene. Die elektrischen Kontakte zu den Elektroden werden auf der einen Seite durch einen bei der Erzeugung der Trägerstruktur eingesinterten Tantal- oder Niobdraht und die gegen den Draht isolierte metallische Kondensatorhülle dargestellt

Die Kapazität C eines Kondensators berechnet sich nach folgender Formel:

$$C = (F \cdot \varepsilon)/(d \cdot V_F)$$

wobei F die Kondensatoroberfläche, $\varepsilon$ die Dielektrizitätskonstante, d die Dicke der Isolatorschicht pro V Formierspannung und $V_F$ die Formierspannung bezeichnet. Die Dielektrizitätskonstante $\varepsilon$ für Tantalpentoxid beträgt 27, das Dickenwachstum der Schicht pro Volt Formierspannung d beträgt etwa 18 Å/V. Aufgrund der Dichteunterschiede von Metall und Pentoxid, wächst die Pentoxidschicht bei der Formierung zu etwa 1/3 in die ursprüngliche Metallstruktur hinein und zu 2/3 auf diese auf. Durch die aufwachsende Pentoxidschicht kommt es zu einer Verkleinerung der Poren bis hin zur Verstopfung oder zur Ausbildung geschlossener Poren, in denen eine Kathode nicht mehr ausgebildet werden kann. Es kommt also zum Verlust an aktiver Kondensatorfläche. Der Verlust ist um so größer, je größer die Formierspannung, d. h. die Dicke der Pentoxidschicht ist. Idealerweise sind die kleinsten Poren der Anodenstruktur und deren Zugangsquerschnitte größer als ein Mehrfaches der Dicke der für die gewählte Formierspannung sich bildenden Pentoxidschicht.

Feinteilige Tantal-Primärpulver mit spezifischen Oberflächen von 4 bis 20 $m^2$/g werden durch Reduktion von Kaliumheptafluorotantalat mittels Alkalimetall in Alkalichloridschmelzen oder in neuerer Zeit von feinteiligen Oxiden mittels gasförmiger reduzierender Metalle oder Metallhydride, insbesondere Magnesium, oder durch mechanische Zerkleinerung von mittels Elektronenstrahlen im Vakuum oder unter Wasserstoff reduzierten Oxiden erhaltenen Tantalblöcken nach Versprödung durch Wasserstoffsättigung ("Chips") gewonnen.

Derartige Primärpulver weisen regelmäßig noch eine Reihe von Nachteilen auf, aufgrund derer sie nach heutigem Standard noch nicht für die Herstellung von Kondensatoren geeignet sind. Üblicherweise werden sie daher, gegebenenfalls nach einer Hochtemperaturbehandlung zur Stabilisierung von Primär- und Sekundärstrukturen, einer reduzierenden Behandlung bei Temperaturen unterhalb 1000°C ("Desoxidation") unterzogen. Dabei werden die Primärpulver in einer oder mehreren Stufen mit bezogen auf den Restsauerstoffgehalt überstöchiometrischen Mengen mit feinteiligem Magnesium vermischt und unter Schutzgas für mehrere Stunden auf die Desoxidationstemperatur von 700 bis 1000°C erhitzt. Während der Desoxidation wird restlicher Sauerstoff entzogen, die Primärteilchenstruktur vergleichmäßigt und die Sekundärteilchenstruktur, insbesondere bezüglich der Porenstruktur und der Stabilität, günstig beeinflußt. Mit der Desoxidation ist eine Primärkornvergröberang und Verminderung der spezifischen Oberfläche verbunden, die um so stärker ist, je größer die spezifische Oberfläche des Primärpulvers ist. Es gelingt daher kaum, für die Kondensatorherstellung geeignete Tantalpulver mit spezifischen Oberflächen oberhalb von 3 $m^2$/g herzustellen. Der Grund wird darin gesehen, dass das Pulver bei der Desoxidation in Kontakt mit flüssigem Magnesium ist und daher die Desoxidationsgeschwindigkeit und die lokale Temperatur während der Desoxidation nicht kontrollierbar ist. Offenbar kommt es aufgrund der Exothermie der Desoxidation zu lokalen Überhitzungen und lokal starken Versinterungen mit Porositätsverlusten.

Durch Sintern der Anodenpresskörper und Formierung kommt es weiter zum Verlust an aktiver Kondensatoruberfläche, so dass aus einem Pulver mit einer spezifischen Oberfläche von 3 $m^2$/g selbst bei minimal erforderlicher Sintertemperatur von 1200°C Kondensatoren mit spezifischen Kapazitäten von maximal 150.000$\mu$FV/g bei einer Formierspannung von 16 V, entsprechend einer aktiven Kondensatorfläche von 1 $m^2$/g herstellbar sind.

Es wurde nun gefunden, dass die Primärstrukturvergröberung während der Desoxidation stark reduziert werden kann, wenn der Kontakt des Metallpulvers zum flüssigen Magnesium vermieden wird und der Dampfdruck des reduzierenden Metalls kontrolliert wird. Insbesondere wurde gefunden, dass die spezifische Oberfläche (gemessen nach ASTM D 3663, Brunauer, Emmet und Teller "BET") während der Desoxidation um weniger als einen Faktor 2 reduziert wird. Ferner wird die Kontamination durch nicht verdampfende Restverunreinigungen des reduzierenden Metalls vermieden.

Darüberhinaus wird die Porenshruktur offenbar günstig beeinflusst, so dass der Verlust an Kondensatorfläche durch Formierung gering bleibt, so dass Kondensatoren mit extrem hoher spezifischer Kapazität herstellbar sind. Nach dem Verfahren gemäß vorliegender Erfindung lassen sich Tantalpulver mit einer spezifischen Oberfläche von 4 bis 8 $m^2$/g herstellen, die nach Pressen auf eine Pressdichte von 5 g/$cm^3$ und Sintern bei 1210°C über 10 Minuten nach Formieren bis zu einer Formierspannung von 10V eine spezifische Kapazität von 220.000 bis 350.000 $\mu$FV/g aufweisen.

Nach dem Verfahren gemäß vorliegender Erfindung lassen sich Tantalpulver mit einer spezifischen Oberfläche von 3,5 bis 6 $m^2$/g herstellen, die nach Pressen auf eine Pressdichte von 5 g/$cm^3$ und Sintern bei 1210°C über 10 Minuten nach Formieren bis zu einer Formierspannung von 10V eine spezifische Kapazität von 180.000 bis 250.000 $\mu$FV/g aufweisen.

Nach dem Verfahren gemäß vorliegender Erfindung lassen sich weiterhin Tantalpulver mit einer spezifischen Oberfläche von 3,5 bis 6 $m^2$/g herstellen, die nach Pressen auf eine Pressdichte von 5 g/$cm^3$ und Sintern bei 1210°C über 10 Minuten nach Formieren bis zu einer Formierspannung von 10V eine Kapazität von 200.000 bis 300.000 $\mu$FV/g und nach Formieren bis zu einer Formierspannung von 16 V eine Kapazität von 180.000 bis 250.000 $\mu$PV/g aufweisen. Dabei werden die jeweils geringeren spezifischen Kapazitäten mit dem Pulver der geringen spezifischen Oberfläche und die jeweils höchsten Kapazitäten mit dem Pulver mit der höchsten spezifischen Oberfläche erhalten. Zwischenwerte ergeben sich jeweils bei Zwischenwerten der spezifischen Oberfläche. Wenn höhere Sintertemperaturen, beispielsweise bis 1250°C, eingesetzt werden, werden aufgrund der stärkeren Versinterung geringfügig niedrigere spezifische Kapazitäten erhalten.

Gegenstand der vorliegenden Erfindung ist auch ein Verfahren zur Desoxidation von Ventilmetallpulvern mittels reduzierender Metalle und/oder Metallhydride, das dadurch gekennzeichnet ist, dass die Desoxidation ohne Kontakt des zu desoxidierenden Metallpulvers mit flüssigem reduzierenden Metall/Metallhydrid durchgeführt wird.

Vorzugsweise wird die Desoxidation bei einem Dampfpartialdruck des reduzierenden Metalls/Metallhydrides von 5 bis 110 hPa durchgeführt.
Der Dampfpartialdruck des reduzierenden Metalls beträgt weiter bevorzugt weniger als 100 hPa, insbesondere bevorzugt zwischen 30 und 80 hPa.

Erfindungsgemäß werden das Metallpulver und das reduzierende Metall/Metallhydrid in einem Reaktor an getrennten Orten aufgestellt, so dass das reduzierende Metall/Metallhydrid nur über die Gasphase zu dem Metallpulver gelangt. Der Dampfpartialdruck des reduzierenden Metalls/Metallhydrids wird durch dessen Temperatur kontrolliert.

Die Temperatur des Metallpulvers ("Desoxidationstemperatur") sollte vorzugsweise zwischen 680 und 880°C gehalten werden, insbesondere bevorzugt zwischen 690 und 800°C, weiter bevorzugt unterhalb 760°C. Bei niedrigerer Temperatur des Metallpulvers wird die für eine wirksame Desoxidation erforderliche Zeit unnötig verlängert. Bei zu starker Überschreitung der bevorzugten Temperatur des Metallpulvers besteht die Gefahr zu starker Primärkornvergröberung.

Der Reaktor, in dem sich Metallpulver und reduzierendes Metall/Metallhydrid an getrennten Orten befinden, kann einheitlich temperiert sein, wenn der Dampfdruck des Metall/Metallhydrides bei der Desoxidationstemperatur in dem geforderten Bereich liegt.

Bevorzugt wird als reduzierendes Metall Magnesium und/oder Magnesiumhydrid eingesetzt.

Vorzugsweise wird der Desoxidationsreaktor von einem inerten Trägergas langsam durchströmt. Der Gasdruck im Reaktor beträgt vorzugsweise 50 bis 500 hPa, besonders bevorzugt 100 bis 450 hPa, insbesondere bevorzugt 200 bis 400 hPa.

Als Trägergas sind inerte Gase wie Helium, Neon, Argon oder deren Mischungen geeignet. Vorteilhaft können geringe Zusätze von Wasserstoff sein. Das Trägergas wird vorzugsweise vor oder während der Einleitung in den Reaktor auf die Reaktortemperatur vorgewärmt, so dass eine Dampfkondensation des reduzierenden Metalls vermieden wird.

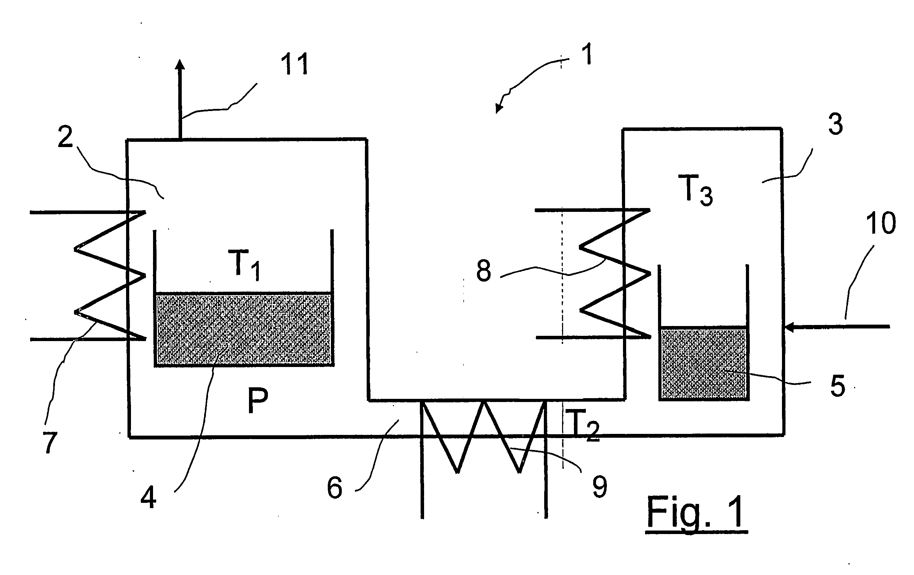

Fig. 1 zeigt schematisch einen für die Durchführung des erfindungsgemäßen Desoxidationsverfahrens bevorzugt einsetzbaren Reaktor. Der Reaktor 1 weist zwei Reaktorräume 2 und 3, die durch einen Kanal 6 verbunden sind, auf. In dem Reaktorraum 2 wird der Tiegel 4, der das Primärpulver enthält, aufgestellt. Der Reaktorraum 3 enthält den Tiegel 5 mit dem zu verdampfenden reduzierenden Metall/Metallhydrid. Reaktorräume 2 und 3 sowie der Verbindungskanal 6 weisen vorzugsweise getrennte Heizungen 7, 8 und 9 zur Einstellung der Temperaturen $T_1$, $T_2$ und $T_3$ auf. Das reduzierende Metall/Metallhydrid wird bei der Temperatur $T_3$ verdampft. Die Temperatur $T_2$ in dem Kanal 6 wird so gewählt, dass eine Kondensation des reduzierenden Metalls/Metallhydrids dort sicher vermieden wird. Zum Transport des reduzierenden metall-/Metallhydriddampfes wird in den Reaktorraum 3 ein inertes Trägergas 10 eingespeist und aus dem Reaktorraum 2 unter Aufrechterhaltung eines Druckes P abgezogen. Das erfindungsgemäße Desoxidationsverfahren kann vorteilhaft bei allen Metallpulvern eingesetzt werden. Bevorzugt sind jedoch hoch sinteraktive Tantal-Primärpulver mit hoher spezifischer Oberfläche von 4 bis 20 $m^2$/g, besonders bevorzugt 6 bis 15 $m^2$/g. Das Verfahren kann aber auch für agglomerierte, also im Hochvakuum temperaturbehandelte Primärpulver, angewendet werden.

Bevorzugte Metall-Primärpulver weisen ferner eine nach ASTM B 822 (Gerät Malvern MasterSizer S$\mu$) bestimmte Korngrößenverteilung (Sekundärstruktur) charakterisiert durch D10 von 3 bis 25 $\mu$m, D50 von 15 bis 80 $\mu$m und D90 von 50 bis 280 $\mu$m auf, wobei die D10, D50 und D90 die 10-, 50-(Median) bzw. 90-Massonpercentile der Korngrößenverteilung beschreiben. Die Korngrößenverteilung der Primärpulver bleibt bei der Desoxidation im Wesentlichen erhalten. Im Allgemeinen sind die nach ASTM B 822 bestimmten Korngrößenverteilungen charakterisiert durch D10 von 3 bis 50 $\mu$m, D50 von 15 bis 150 $\mu$m und D90 von 50 bis 400 $\mu$m;

Besonders bevorzugte Metall-Primärpulver wurden nach einem nicht vorveröffentlichten Vorschlag der Anmelderin durch Reduktion feinteiliger Oxidpulver mittels dampfförmiger reduzierender Metalle wie Aluminium, Magnesium, Calcium, Barium und/oder Lanthan und/oder deren Hydride, insbesondere Magnesium, unter einem inerten Trägergas hergestellt, wobei die Reduktion bei einem Dampfpartialdruck des reduzierenden Metalls/Metallhydrides von 5 bis 110 hPa, bevorzugt weniger als 80 hPa, insbesondere bevorzugt zwischen 8 und 50 hPa und einem Trägergasdruck von 50 bis 800 hPa, bevorzugt weniger als 600 hPa, insbesondere bevorzugt zwischen 100 und 500 hPa, durchgeführt wird.

Als Tantalpentoxidpulver wird vorzugsweise ein poröses, schwammartiges Pulver mit nach ASTM B 822 (Gerät Mälvern MasterSizer S$\mu$) bestimmter Teilchengrößenverteilung von D10; 2 bis 70 $\mu$m, D50: 15 bis 200 $\mu$m und D90: 80 bis 430 $\mu$m und einer nach ASTM D 3663 bestimmten Oberfläche (BET) von 0,05 bis 0,5 $m^2$/g eingesetzt.

Als Tantalpentoxidpulver wird insbesondere ein poröses, schwammartiges Pulver mit nach ASTM B 822 (Gerät Malvem MasterSizer S$\mu$) bestimmter Teilchengrößenverteilung von D10: 2 bis 30 $\mu$m, D50: 15 bis 175 $\mu$m und D90: 80 bis 320 $\mu$m und einer nach ASTM D 3663 bestimmten Oberfläche (BET) von 0,05 bis 0,5 $m^2$/g eingesetzt.

Bei diesem bevorzugten Reduktionsverfahren kann die Reduktionstemperatur auf 680 bis 880°C, ohne wesentliche Verlängerung der Reduktionszeit, abgesenkt werden. Bei Einsatz von Tantal- oder Nioboxidagglomeratpulvern mit Primärteilchengrößen (Durchmesser bei sphärischen Primärteilchen, geringste Abmessung bei nicht-sphärischen Primärteilchen) von 0,1 bis 5 $\mu$m sind Reduktionszeiten zwischen 6 und 12 Stunden, vorzugsweise bis zu 9 Stunden ausreichend. Nicht zuletzt bedingt die geringere Reaktionstemperatur eine nicht unerhebliche Einsparung von Energie und die Schonung von bei der Reduktion erforderlichen verfahrenstechnischen Apparaten. Es werden metallische Primärpulver mit einer besonders günstigen Sekundärstruktur erhalten.

Nach Beendigung der Reduktion erfolgt eine Passivierung der erhaltenen Metall-Primärpulver durch Oxidation der Pulverteilchenoberfläche durch kontrollierte allmähliche Sauerstoffeinleitung in den Reaktor nach Abkühlung auf eine Temperatur unterhalb 100°C und Auswaschung des gebildeten Oxides des reduzierenden Metalls mittels Säuren und Wasser. Dabei werden Tantalpulver mit spezifischen Oberflächen bis 20 $m^2$/g, vorzugsweise von 6 bis 15 $m^2$/g, insbesondere bevorzugt von 8 bis 14 $m^2$/g, im Wesentlichen unter Erhaltung der Teilchengrößenverteilung des Ausgangsoxides mit bereits hervorragender mechanischer Stabilität der Teilchen erhalten.

Der Sauerstoffgehalt des Tantal-Primärpulvers nach Passivierung liegt bei ca. 3000 $\mu$g/$m^2$ insbesondere bei 2400 $\mu$g/$m^2$ bis 4500 $\mu$g/$m^2$, oder von 2500 $\mu$g/$m^2$ bis 3600 $\mu$g/$m^2$, oder von 2600 $\mu$g/$m^2$ bis 3100 $\mu$g/$m^2$, insbesondere weniger als 3000 $\mu$g/$m^2$.

Der Stickstolfgehalt der Pulver die nach dem Verfahren gemäß vorliegender Erfindung erhältlich sind, liegt meist bei 100 ppm bis 10000 ppm, oder bei 400 ppm bis 7500 ppm, oder bei 400 ppm bis 5000 ppm, insbesondere bei 400 ppm bis 3000 ppm.

Sauerstoff- und Stickstoffgehalte werden vorteilhaft mit einem Nitrogen/ Oxygen Determinator Modell TC 501-645 (Leco Instrum GmbH) bestimmt.

Der Phosphorgehalt der Pulver die nach dem Verfahren gemäß vorliegender Erfindung erhältlich sind, liegt meist bei 10 ppm bis 400 ppm, oder bei 10 ppm bis 250 ppm, oder bei 10 ppm bis 200 ppm, insbesondere bei 10 ppm bis 150 ppm. Dem Fachmann ist bekannt, auf welche Weise der Stickstoff- oder Phosphurguhalt gezielt eingestellt werden kann.

Die nach dem erfindungsgemäßen Verfahren erhaltenen Tantalpulver mit großer spezifischer Oberfläche sind für die Herstellung von Elektrolytkondensatoren mit spezifischen Kapazitäten im Bereich von 100.000 bis 350.000 $\mu$FV/g in an sich bekannter Weise durch Pressen zu Anodenstrukturen, Sintern der Anodenstrukturen zu Anodenkörpern bei 1200 bis 1250°C, Formieren und Anbringen der Gegenelektrode, geeignet.

Ungesinterte Anodenkörper, die aus dem Pulver, welches nach dem Verfahren gemäß der Erfindung erhalten wurden, besitzen eine Pressfestigkeit von 1 kg bis 11 kg, oder von 2 kg bis 8 kg, oder von 2 kg bis 6 kg, insbesondere von 1 kg bis 4 kg. Gesinterte Anodenkörper, die aus dem Pulver, welches nach dem Verfahren gemäß der Erfindung erhalten wurden, besitzen eine Pressfestigkeit von größer als 10 kg, oder von größer als 20 kg, oder von größer als 30 kg, insbesondere größer als 40 kg. Die Pressfestigkeiten der gesinterten oder ungesinterten Anoden werden mit einem Prüfgerät der Fa. Prominent, Modell "Promi 3001", bestimmt. Für die Bestimmung der Preßfestigkeit von ungesinterten Anoden werden zylindrische Anoden mit einer Masse von 500 mg, einem Durchmesser von 5.1 mm und einer Länge von 4.95 mm verwendet, die ohne eingebetteten Draht auf eine Preßdichte von 5.0 g/cm$^3$ gepresst wurden.

Für die Bestimmung der Pressfestigkeit von gesinterten Anoden werden zylindrische Anoden mit einer Masse von 140 mg, einem Durchmesser von 3.00 mm und einer Länge von 3.96 mm verwendet, die mit eingebetteten Draht auf eine Preßdichte von 5.0 g/cm$^3$ gepreßt und anschließend für 10 Minuten im Hochvakuum ($10^{-4}$ mbar) bei 1210 °C gesintert wurden.

Bevorzugte Tantalpulver sind hochrein, insbesondere bezüglich der Gehalte an Verunreinigungen, die den Reststrom negativ beeinflussen können: Die Summe der Gehalte an Natrium und Kalium liegt unter 5 ppm, vorzugsweise unter 2 ppm, die Summe der Gehalte an Eisen, Chrom und Nickel liegt unter 25 ppm, vorzugsweise 15 ppm.

Die Schüttdichte bevorzugter Tantalpulver liegt in dem für Verarbeitung zu Kondensatoren günstigen Bereich von 25 bis 35 g/inch$^3$.

Die Fließfähigkeit (Hall-Flow) der Pulver liegt bei kleiner als 150 s/25 g oder bei 100 s/25 g oder bei 50 s/25 g, insbesondere bei 35 s/25 g.

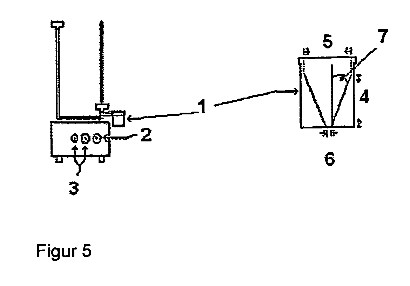

Die Fließfähigkeit wurde in einer Vorrichtung ermittelt, wie sie in Figur 5 abgebildet ist. Diese Vorrichtung weist einen Fließtrichter 1 auf, in welche 25 g der Probe gegeben wird. Der Fließtrichter besitzt eine obere Öffnung 5 mit einem Durchmesser von 50,5 mm, eine untere Öffnung 6 mit einem Durchmesser von 3,8 mm, eine Höhendifferenz 4 von 45,6 mm und einen Neigungswinkel 7 von 30,8°. Dieser Trichter ist befestigt an einem Vibrator 3, mit einem Schalter 2, dessen Vibrationsgeschwindigkeit eingestellt werden kann. Für den Versuch wurde betrug die Vibrationsrate 38,5 Vibrationen pro Sekunde.

Die nach dem Verfahren gemäß vorliegender Erfindung erhältlichen Pulver weisen außerdem einen FSSS-Wert (Fisher Sub Sicvc Sizcr) bestimmt nach ASTM B 330-02 von 0,1 μm bis 4 μm, oder von 0,5 μm bis 3 μm, oder von 0,5 μm bis 2,5 μm, insbesondere von 0,8 μm bis 2,2 μm auf.

Die Porenverteilungen von aus diesen Pulvern hergestellten gesinterten Anoden (zylindrische Form, Preßdichte 5.0 g/cm$^3$, Durchmesser 5.10 mm, Länge 4.95 mm, Masse 500 mg, Sinterung bei 1210 °C bei $10^{-4}$ mbar für 10 Minuten) zeigen ein oder mehrere Maxima, die in einem Bereich von 0,05 μm bis 10 μm Größe, oder von 0,05 μm bis 5 μm Größe, oder von 0,05 μm bis 3 μm Größe, oder von 0,05 μm bis 1 μm Größe, liegen (zur Bestimmung der Porengrößenverteilung dient ein Gerät der Fa. Micrometrics, "Auto Pore III" mit der Meßsoftware "Auto Pore IV")

In einer Ausgestaltung der Erfindung weist das desoxidierte Pulver, welches nach dem Verfahren gemäß der Erfindung erhältlich ist, eine Schüttdichte von 25 g/inch$^3$ bis 32 g/inch$^3$, eine spezifische Oberfläche von 5 m$^2$/g bis 8 m$^2$/g sowie eine nach ASTM B 822 (Gerät Malvern MasterSizer Sμ) bestimmte Korngrößenverteilung (Sekundärstruktur) charakterisiert durch D10 von 30 bis 40 μm, D50 von 120 bis 135 μm und D90 von 240 bis 265 μm auf, wobei die D10, D50 und D90 die 10-, 50-(Median) bzw. 90-Massenpercentile der Korngrößenverteilung beschreiben und die spezifische Kapazität beträgt 280.000 μFV/g bis 340.000 μFV/g bei Formierung bei 10 V bzw. 230.000 μFV/g bis 280.000 μFV/g bei einer Formierung bei 16 V. Die Restströme liegen bei 0,4 nA/μFV bis 0,65 nA/μFV (10 V Formierspanung), bzw. bei 0,4 nA/μFV bis 0,5 nA/μFV (16 V Formierspannung).

In einer weiteren Ausgestaltung der Erfindung weist das desoxidierte Pulver, welches nach dem Verfahren gemäß der Erfindung erhältlich ist, eine Schüttdichte von 25 g/inch$^3$ bis 35 g/inch$^3$, eine spezifische Oberfläche von 1,9 m$^2$/g bis 7,8 m$^2$/g sowie eine nach ASTM B 822 (Gerät Malvern MasterSizer Sμ) bestimmte Korngrößenverteilung (Sekundärstruktur) charakterisiert durch D10 von 14 bis 20 μm, D50 von von 29 bis 47 μm und D90 von 51 bis 87 μm auf, wobei die D 10, D50 und D90 die 10-, 50-(Median) bzw. 90-Massenpercentile der Korngrößenverteilung beschreiben und die spezifische Kapazität beträgt 125.000 μFV/g bis 344.000 μFV/g, oder 150.000 μFV/g bis 320.000 μFV/g, oder 180.000 μFV/g bis 310.000 μFV/g bei Formierung bei 10 V bzw. 120.000 μFV/g bis 245.000 μFV/g bei einer Formierung bei 16 V. Die Restströme liegen bei 0,4 nA/μFV bis 0,98 nA/μFV, oder bei 0,4 nA/μFV bis unter 0,9 nA/μFV (10 V Formierspannung) bzw. bei 0,4 nA/μFV bis 0,75 nA/μFV (16 V Formierspannung).

Die nachfolgenden Beispiele illustrieren die vorliegende Erfindung. Auf die zitierten Literaturstellen wird Bezug genommen, diese sind somit Bestandteil der Offenbarung.

**Beispiele 1 bis 12**

A) Reduktion von Tantalpentoxid

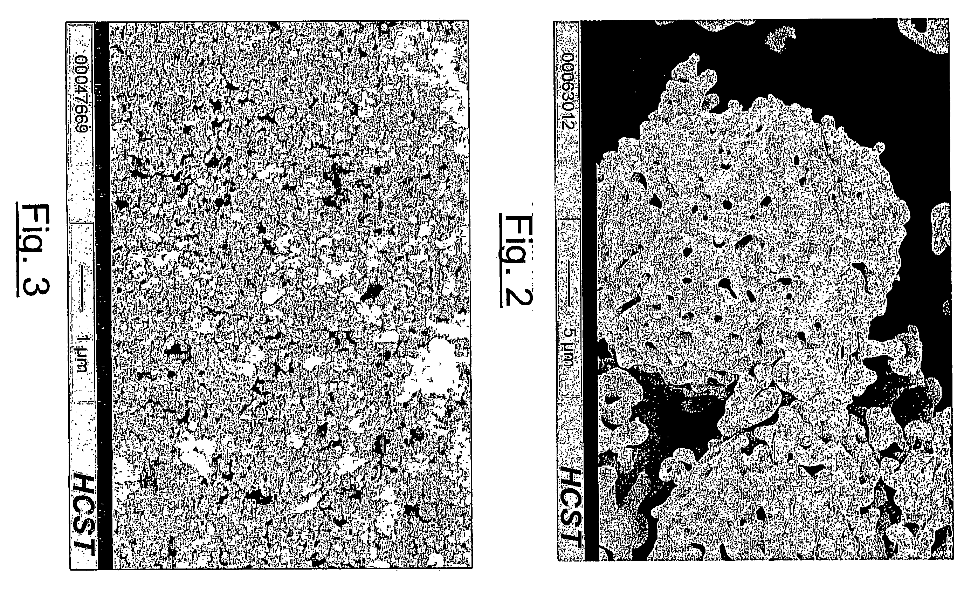

Für die Beispiele 1 bis 9 (Primärpulver 1 bis 9) wird ein feinteiliges, teilversintertes Ausgangs-Tantalpentoxid mit einer nach ASTM B 822 (Gerät Malvern MasterSizer Sμ) bestimmten Teilchengrößenverteilung entsprechend einem D10-Wert von 17,8 μm, einem D50-Wert von 34,9 μm und einem D90- , Wert von 71,3 μm und einer ASTM D 3663 bestimmten spezifischen Oberfläche (BET) von 0,14 m$^2$/g eingesetzt. Die Einzelteilchen des Pulvers sind hochporös und haben angenähert sphärische Gestalt. Aus REM-Aufnahmen ist erkennbar, dass die Teilchen aus stark versinterten Agglomeraten von angenähert kugelförmigen Primärteilchen eines mittleren Durchmessers von 2,4 μm (visuell bestimmt aus REM-Aufnahmen) bestehen. Fig. 2 zeigt eine REM Aufnahme des Ausgangspentoxides.

In den Beispielen 10 bis 12 (Primärpulver 10 bis 12) wird von einem entsprechenden Material mit unregelmäßiger Gestalt und einer durch D10=32,4μm, D50=138,7μm und D90=264,8μm charakterisierten Teilchengrößenverteilung ausgegangen. Die spezifische Oberfläche beträgt 0,12 m$^2$/g. Das Ausgangs-Tantalpentoxid wird auf einem Geflecht aus Tantaldraht in einen mit Tantalblech ausgekleideten Reaktor oberhalb eines Tiegels, der die 1,1-fach stöchiometrische Menge (bezogen auf den Sauerstoffgehalt des Pentoxides) an Magnesium enthält, gegeben. Der Reaktor wird durch einen Ofen beheizt. Unterhalb des Magnesium enthaltenden Tiegels befindet sich am Reaktor eine Gaseinlassöffnung sowie oberhalb der Tantalpentoxidschüttung eine Gasabzugsöffnung. Der Gasinnendruck des Ofens kann über eine die Ofenwand durchdringende Stichleitung gemessen werden. Als Schutzgas wird Argon eingesetzt, das langsam durch den Ofen strömt. Vor Beginn des Aufheizens auf die Reduktionstemperatur wird der Reaktor mit Argon gespült. Vor dem Erreichen der Reduktionstemperatur wird der Argondruck für die Reduktion eingestellt. Nach Beendigung der Reaktion und Abkühlen des Reaktors wird allmählich Luft in den Reaktor gegeben, um das Metallpulver gegen Abbrand zu passivieren. Das gebildete Magnesiumoxid wird durch Waschen mit Schwefelsäure und anschließend entmineralisiertem Wasser bis zur Neutralität entfernt. Tabelle 1 zeigt die Reduktionsbedingungen und Eigenschaften der nach dem Abkühlen und Passivieren erhaltenen Primärpulver der Beispiele 1 bis 12. Die Werte "Mastersizer D 10, D50 ,D90" sind nach ASTMB 822 bestimmt. In der rechten Spalte ist der Sauerstoffgehalt des reduzierten Tantals bezogen auf die spezifische Oberfläche angegeben, d.h. der Qüotient aus Sauerstoffgehalt in ppm und der nach BET gemessenen spezifischen Oberfläche. Ein oberflächlicher Sauerstoffgehalt von etwa 3000 ppm/(m$^2$/g) ist erforderlich, da das Tantalpulver andernfalls pyrophor wäre und bei Kontakt mit der Umgebungsluft abbrennen würde.

Die Beispiele 1 bis 12 wurden bei im wesentlichen konstantem Argon-Druck und konstanter Reaktortemperatur durchgeführt. Die Reaktortemperatur definiert jeweils auch den Magnesiumdampfpartialdruck: 8 hPa bei 700°C, 19 hPa bei 750°C, 29 hPa bei 780°C, 39 hPa bei 800°C, 68 hPa bei 840°C, 110 hPa bei 880°C.

Tabelle 1:

| Bsp. Nr. | Reduktionsbedingungen | | | Produkteigenschaften Primärpulver | | | | |
|---|---|---|---|---|---|---|---|---|
| | Gasdruck | Reaktor-Temperatur | Reg.-Dauer | Spez. Oberfläche | Mastersizer | | | O$_2$-Gehalt |
| | | | | | D10 | D50 | D90 | |
| | hPa | °C | h | m$^2$/g | μm | μm | μm | μg/m$^2$ |
| 1 | 50 | 700 | 8 | 13,4 | 14,6 | 30,5 | 52,7 | 3441 |
| 2 | 200 | 750 | 8 | 10,1 | 16,0 | 33,1 | 66,0 | 2765 |
| 3 | 350 | 750 | 8 | 12,3 | 14,9 | 31,1 | 53,4 | 3064 |
| 4 | 500 | 780 | 8 | 7,3 | 14,2 | 29,7 | 49,7 | 4063 |
| 5 | 500 | 840 | 8 | 6,3 | 12,9 | 26,9 | 43,7 | 2492 |
| 6 | 550 | 860 | 8 | 4,4 | 11,8 | 26,8 | 44,8 | 2654 |
| 7 | 580 | 880 | 8 | 4,7 | 9,3 | 26,6 | 48,4 | 2787 |
| 8 | 580 | 900 | 8 | 3,8 | 16,2 | 32,7 | 59,7 | 2872 |
| 9 | 1000 | 940 | 8 | 2,7 | 16,7 | 34,6 | 60,3 | 2798 |
| 10 | 200 | 750 | 8 | 12,8 | 33,9 | 128,3 | 244,1 | 2843 |
| 11 | 350 | 750 | 8 | 12,1 | 31,6 | 134,2 | 252,6 | 2974 |
| 12 | 500 | 780 | 8 | 8,4 | 36,8 | 137,5 | 260,1 | 2756 |

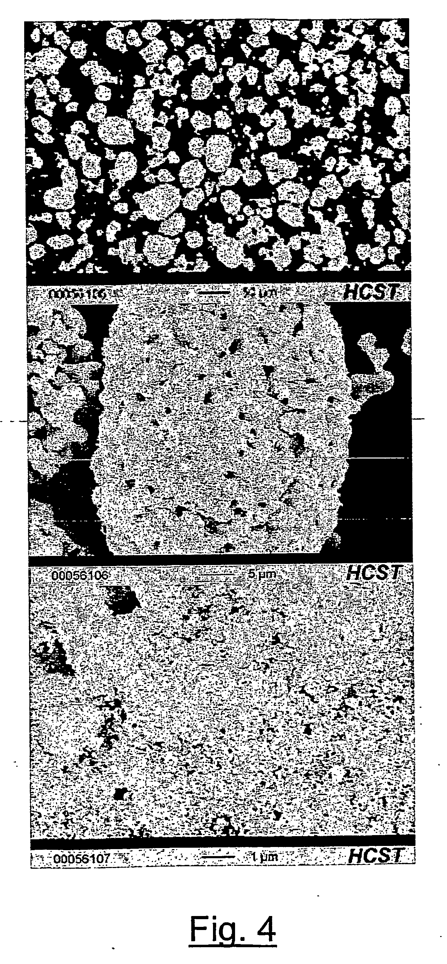

Fig. 3 zeigt eine REM-Aufnahme des Primärpulvers nach Beispiel 9. Fig. 4 zeigt eine REM-Aufnahme des Primärpulvers nach Beispiel 3.

Die Korngrößenverteilung blieb bei allen Proben in etwa erhalten, wie aus den Mastersizer D10-, D50- und D90-Werten erkennbar ist Es ergab sich aber eine vom Dampfpartialdruck des reduzierenden Metalls abhängige spezifische Oberfläche. Der Sauerstoffgehalt aller Proben lag im wesentlichen bei etwa 3000 μg/m$^2$ (ppm/(m$^2$/g)) Oberfläche, d.h. der Sauerstoffgehalt überstieg kaum den notwendigen Sauerstoffgehalt, damit die Pulver nicht im Kontakt mit der Umgebung abbrannten.

B) Desoxidation der Tantalpulver

Die Primärpulver der Beispiele 1 bis 12 wurden mit Ammoniumhydrogenphosphatlösung getränkt und getrocknet, so dass eine Phosphordotierung von 150 ppm resultiert. Die Pulver wurden anschließend in einem Tiegel in ein horizontales Reaktorrohr eingebracht In einigem Abstand von dem die Pulver enthaltenden Tiegel wurde eine Tiegel mit der 1,2-fach stöchiometrischen Menge an Magnesium bezogen auf den Sauerstoffgehalt des Pulvers in das Reaktorrohr eingebracht Die Tiegel können durch außerhalb des Reaktorrohres angeordnete getrennte Heizungen beheizt werden. Das Reaktorrohr wird mittels eines vor dem das Magnesium enthaltenden Tiegels vorgesehenen Gaseinlasses mit Argon-Schutzgas gespült, das hinter dem das Tantalpulver enthaltenden Tiegel abgezogen wird. Der Reaktor wird im Bereich des das Pulver enthaltenden Tiegels auf die in Tabelle 2 angegebene Pulvertemperatur erhitzt und der Gasdruck mittels entsprechender Regelventile auf den in Tabelle 2 angegebenen Gasdruck geregelt Anschließend wird der das Magnesium enthaltende Tiegel auf die in Tabelle 2 angebene Magnesiumtemperatur erhitzt. Die Desoxidationsbedingungen werden für die ebenfalls in Tabelle 2 angebene Dauer aufrechterhalten. Anschließend wird der Reaktor abgekühlt und bei Erreichen einer Temperatur von unterhalb 100°C durch allmähliches Einleiten von Luft das Tantalpulver passiviert, vom Magnesiumoxid frei gewaschen und durch ein Sieb mit 400μm Maschenweite gerieben. Die Teilchengrößenverteilung der erhaltenen Pulver (als D10-, D50,- und D90-Wert nach ASTM B 822) und die spezifische Oberfläche sind in Tabelle 2 angegeben.

Tabelle 2:

| Bsp. Nr. | Desoxidationsbedingungen | | | | Pulvereigenschaften nach Desoxidation | | | | |
| | Pulver-Temp. | Mg-Temp. | Gasdruck | Dauer | Mastersizer | | | Spez. Oberfläche | Schüttdichte |
| | | | | | D10 | D50 | D90 | | |
| | °C | °C | hPa | h | μm | μm | μm | m$^2$/g | g/inch$^3$ |
| 1 | 850 | 800 | 200 | 3 | 17,3 | 46,8 | 86,5 | 7,8 | 25,4 |
| 2 | 850 | 800 | 200 | 3 | 16,5 | 37,4 | 66,2 | 6,6 | 26,7 |
| 3 | 850 | 800 | 200 | 3 | 19,1 | 36,5 | 72,3 | 6,1 | 30,8 |
| 4 | 850 | 820 | 250 | 2,5 | 14,8 | 34,3 | 65,7 | 4,2 | 32,2 |
| 5 | 850 | 820 | 250 | 2,5 | 15,4 | 31,8 | 77,8 | 3,6 | 31,4 |
| 6a | 850 | 840 | 300 | 2 | 14,3 | 37,6 | 64,9 | 3,0 | 30,7 |
| 6b | 760 | 750 | 200 | 4 | 12,2 | 29,7 | 51,8 | 3,5 | 31,8 |
| 7a | 850 | 840 | 300 | 2 | 15,3 | 34,7 | 70,1 | 3,2 | 34,6 |
| 7b | 720 | 700 | 200 | 4,5 | 14,9 | 32,4 | 58,3 | 3,9 | 34,3 |
| 8a | 850 | 840 | 300 | 2 | 17,9 | 36,3 | 62,7 | 2,2 | 33,2 |
| 8b | 740 | 720 | 200 | 4,5 | 16,9 | 33,7 | 61,9 | 2,8 | 34,7 |
| 9 | 850 | 850 | 300 | 2 | 16,2 | 33,9 | 68,9 | 1,9 | 33,8 |
| 10 | 850 | 800 | 250 | 2 | 34,8 | 128,3 | 259,5 | 7,6 | 26,2 |
| 11 | 850 | 800 | 250 | 2 | 33,2 | 131,7 | 262,0 | 6,9 | 25,7 |
| 12 | 850 | 800 | 250 | 2 | 31,9 | 127,9 | 248,1 | 5,5 | 31,3 |

Tabelle 3:

| Bsp. Nr. | Chemische Analyse ppm | | | | | | | | | | |
| | C | H | Mg | N | O | P | Na | K | Fe | Cr | Ni |
| 1 | 22 | 248 | 31 | 245 | 22537 | 153 | <0,5 | <0,5 | 8 | <3 | <3 |
| 2 | 23 | 256 | 28 | 221 | 19411 | 155 | <0,5 | <0,5 | 7 | <3 | <3 |

(fortgesetzt)

| Bsp. Nr. | Chemische Analyse ppm | | | | | | | | | | |
|---|---|---|---|---|---|---|---|---|---|---|---|
| | C | H | Mg | N | O | P | Na | K | Fe | Cr | Ni |
| 3 | 21 | 232 | 24 | 267 | 18557 | 151 | <0,5 | <0,5 | 2 | <3 | <3 |
| 4 | 24 | 198 | 23 | 287 | 12274 | 152 | <0,5 | <0,5 | 9 | <3 | <3 |
| 5 | 29 | 227 | 25 | 202 | 10577 | 152 | <0,5 | <0,5 | 6 | <3 | <3 |
| 6a | 23 | 242 | 28 | 289 | 6843 | 150 | <0,5 | <0,5 | 7 | <3 | <3 |
| 7a | 22 | 236 | 22 | 246 | 7702 | 154 | <0,5 | <0,5 | 8 | <3 | <3 |
| 8a | 25 | 241 | 28 | 227 | 6433 | 152 | <0,5 | <0,5 | 9 | <3 | <3 |
| 9 | 21 | 207 | 28 | 265 | 5498 | 150 | <0,5 | <0,5 | 7 | <3 | <3 |
| 10 | 23 | 215 | 27 | 258 | 22904 | 155 | <0,5 | <0,5 | 4 | <3 | <3 |
| 11 | 26 | 264 | 25 | 224 | 20344 | 157 | <0,5 | <0,5 | 8 | <3 | <3 |
| 12 | 24 | 217 | 28 | 243 | 16210 | 154 | <0,5 | <0,5 | 8 | <3 | <3 |

Aus den Pulvern wurden Presskörper der Abmessung 3 mm Durchmesser und 3,96 mm Länge mit einer Pressdichte von 5,0 g/cm³ hergestellt, wobei in die Pressmatrize vor dem Einfüllen der Pulver ein Tantaldraht von 0,2 mm Dicke als Kontaktdraht eingelegt wurde. Die Presskörper wurden bei 1210°C im Hochvakuum während 10 Minuten versintert.

Die Anodenkörper wurden in 0,1%ige Phosphorsäure eingetaucht und bei einer auf 150 mA begrenzten Stromstärke bis zu einer Formierspannung von 10 bzw.16 V formiert. Nach Abfallen der Stromstärke wurde die Spannung noch eine Stunde aufrechterhalten. Zur Messung der Kondensatoreigenschaften wurde eine Kathode aus 18%iger Schwefelsäure eingesetzt. Es wurden mit einer Wechselspannung von 120 Hz gemessen. Spezifische Kapazität und Reststrom sind in Tabelle 4 angegeben.

Tabelle 4:

| Bsp. Nr. | Kondensator Formierspannung 10V | | Kondensator Formierspannung 16V | |
|---|---|---|---|---|
| | Spez. Kapazität | Spez. Reststrom | Spez. Kapazität | Spez. Reststrom |
| | $\mu$FV/g | nA/$\mu$FV | $\mu$FV/g | nA/$\mu$Fv |
| 1 | 342745 | 0,96 | - | - |
| 2 | 312563 | 0,48 | - | - |
| 3 | 294334 | 0,47 | 243988 | 0,41 |
| 4 | 226284 | 0,45 | 194374 | 0,53 |
| 5 | 198544 | 0,44 | 185592 | 0,46 |
| 6a | 151583 | 0,48 | 146745 | 0,61 |
| 6b | 182752 | 0,53 | 172991 | 0,52 |
| 7a | 171997 | 0,85 | 163237 | 0,74 |
| 7b | 207872 | 0,64 | 186473 | 0,65 |
| 8a | 137664 | 0,54 | 124538 | 0,47 |
| 8b | 148764 | 0,62 | 136421 | 0,44 |
| 9 | 125382 | 0,43 | 119231 | 0,47 |
| 10 | 338892 | 0,61 | - | - |
| 11 | 308245 | 0,56 | 241257 | 0,45 |
| 12 | 298677 | 0,48 | 238230 | 0,46 |

**Patentansprüche**

1. Verfahren zur Desoxidation von Ventilmetallpulvern mittels reduzierender Metalle wie Aluminium, Magnesium, Calcium, Barium und/oder Lanthan und/oder deren Hydride unter einem inerten Trägergas, **dadurch gekennzeichnet, dass** die Desoxidation ohne Kontakt des zu desoxidierenden Ventilmetallpulvers mit flüssigem reduzierenden Metall/ Metallhydrid durchgeführt wird, wobei die Desoxidation unter einem inerten Trägergas bei einem Druck von 50 bis 500 hPa erfolgt.

2. Verfahren nach Anspruch 1, **dadurch gekennzeichnet, dass** die Desoxidation bei einem Dampfpartialdruck des reduzierenden Metalls/Metallhydrides von 5 bis 110 hPa durchgeführt wird.

3. Verfahren nach Anspruch 2, **dadurch gekennzeichnet, dass** der Dampfdruck des reduzierenden Metalls/Metallhydrids weniger als 100 hPa beträgt.

4. Verfahren nach Anspruch 2, **dadurch gekennzeichnet, dass** der Dampfdruck des reduzierenden Metalls zwischen 30 und 80 hPa beträgt.

5. Verfahren nach einem der Ansprüche 1 bis 4, **dadurch gekennzeichnet, dass** Ventilmetallpulver aus Titan, Zirkon, Hafnium, Vanadium, Niob, Tantal, Molybdän und/ oder Wolfram, vorzugsweise Niob und/oder Tantal, eingesetzt werden.

6. Verfahren nach Anspruch 5, **dadurch gekennzeichnet, dass** Tantalpulver eingesetzt wird.

7. Verfahren nach einem der Ansprüche 1 bis 6, **dadurch gekennzeichnet, dass** als reduzierendes Metall Magnesium und/oder Magnesiumhydrid eingesetzt wird.

8. Verfahren nach einem der Ansprüche 1 bis 7, **dadurch gekennzeichnet, dass** die Dcsoxidation unter einem inerten Trägergas bei einem Druck von 100 bis 450 hPa, insbesondere bevorzugt 200 bis 400 hPa, beträgt.

9. Verfahren nach einem der Ansprüche 1 bis 8 zur Herstellung von Tantalpulver für Elektrolytkondensatoren, **dadurch gekennzeichnet, dass** ein Tantal-Primärpulver mit einer spezifischen Oberfläche von 4 bis 20 $m^2$/g einer Desoxidation mit Magnesiumdampf bei einem Magnesium-Dampfdruck von 5 bis 110 hPa ohne Kontakt zu flüssigem Magnesium unterzogen wird.

10. Verfahren nach einem der Ansprüche 1 bis 8 zur Herstellung von Tantalpulver für Elektrolytkondensatoren, **dadurch gekennzeichnet, dass** ein durch Reduktion von Tantaloxid erhaltenes Tantal-Primärpulver mit einer spezifischen Oberfläche von 4 bis 20 $m^2$/g einer Desoxidation mit Magnesiumdampf bei einem Magnesium-Dampfdruck von 5 bis 110 hPa ohne Kontakt zu flüssigem Magnesium unterzogen wird.

**Claims**

1. Process for the deoxidation of valve metal powders by means of reducing metals such as aluminium, magnesium, calcium, barium and/or lanthanum and/or their hydrides under an inert carrier gas, **characterised in that** the deoxidation is carried out without contact between the valve metal powder to be deoxidised and liquid reducing metal/ metal hydride, wherein the deoxidation takes place under an inert carrier gas at a pressure of 50 to 500 hPa.

2. Process according to Claim 1, **characterised in that** the deoxidation is carried out at a partial vapour pressure of the reducing metal/metal hydride of 5 to 110 hPa.

3. Process according to Claim 2, **characterised in that** the vapour pressure of the reducing metal/metal hydride is less than 100 hPa.

4. Process according to Claim 2, **characterised in that** the vapour pressure of the reducing metal is between 30 and 80 hPa.

5. Process according to one of Claims 1 to 4, **characterised in that** valve metal powders of titanium, zirconium, hafnium, vanadium, niobium, tantalum, molybdenum and/or tungsten, preferably niobium and/or tantalum, are used.

**6.** Process according to Claim 5, **characterised in that** tantalum powder is used.

**7.** Process according to one of Claims 1 to 6, **characterised in that** magnesium and/or magnesium hydride is used as reducing metal.

**8.** Process according to one of Claims 1 to 7, **characterised in that** the deoxidation is carried out under an inert carrier gas at a pressure of 100 to 450 hPa, and particularly preferably 200 to 400 hPa.

**9.** Process according to one of Claims 1 to 8 for the production of tantalum powder for electrolytic capacitors, **characterised in that** a tantalum primary powder with a specific surface of 4 to 20 m$^2$/g is subjected to a deoxidation with magnesium vapour at a magnesium vapour pressure of 5 to 110 hPa without contact with liquid magnesium.

**10.** Process according to one of Claims 1 to 8 for the production of tantalum powder for electrolytic capacitors, **characterised in that** a tantalum primary powder with a specific surface of 4 to 20 m$^2$/g obtained by reduction of tantalum oxide is subjected to a deoxidation with magnesium vapour at a magnesium vapour pressure of 5 to 110 hPa without contact with liquid magnesium.

**Revendications**

**1.** Procédé pour la désoxydation de poudres métalliques pour soupapes au moyen de métaux réducteurs comme l'aluminium, le magnésium, le calcium, le baryum et/ou le lanthane et/ou leurs hydrures sous un gaz porteur inerte, **caractérisé en ce que** l'on effectue la désoxydation sans contact de la poudre métallique pour soupapes à désoxyder avec un métal/hydrure métallique réducteur liquide, dans lequel on opère la désoxydation sous un gaz porteur inerte à une pression de 50 à 500 hPa.

**2.** Procédé selon la revendication 1, **caractérisé en ce que** l'on effectue la désoxydation à une tension de vapeur partielle du métal/hydrure métallique réducteur de 5 à 110 hPa.

**3.** Procédé selon la revendication 2, **caractérisé en ce que** la tension de vapeur du métal/hydrure métallique réducteur est inférieure à 100 hPa.

**4.** Procédé selon la revendication 2, **caractérisé en ce que** la tension de vapeur du métal réducteur est comprise entre 30 et 80 hPa.

**5.** Procédé selon l'une quelconque des revendications 1 à 4, **caractérisé en ce que** l'on utilise des poudres métalliques pour soupapes en titane, zirconium, hafnium, vanadium, niobium, tantale, molybdène et/ou tungstène, de préférence en niobium et/ou tantale.

**6.** Procédé selon la revendication 5, **caractérisé en ce que** l'on utilise une poudre de tantale.

**7.** Procédé selon l'une quelconque des revendications 1 à 6, **caractérisé en ce que** l'on utilise comme métal réducteur du magnésium et/ou de l'hydrure de magnésium.

**8.** Procédé selon l'une quelconque des revendications 1 à 7, **caractérisé en ce que** l'on effectue la désoxydation sous un gaz porteur inerte à une pression de 100 à 450 hPa, en particulier de préférence 200 à 400 hPa.

**9.** Procédé selon l'une quelconque des revendications 1 à 8 pour la fabrication de poudre de tantale pour des condensateurs électrolytiques, **caractérisé en ce que** l'on soumet une poudre primaire de tantale avec une surface spécifique de 4 à 20 m$^2$/g à une désoxydation avec de la vapeur de magnésium à une tension de vapeur de magnésium de 5 à 110 hPa sans contact avec du magnésium liquide.

**10.** Procédé selon l'une quelconque des revendications 1 à 8 pour la fabrication de poudre de tantale pour des condensateurs électrolytiques, **caractérisé en ce que** l'on soumet une poudre primaire de tantale, obtenue par réduction d'oxyde de tantale, avec une surface spécifique de 4 à 20 m$^2$/g à une désoxydation avec de la vapeur de magnésium à une tension de vapeur de magnésium de 5 à 110 hPa sans contact avec du magnésium liquide.

Fig. 1

EP 1 802 412 B1

EP 1 802 412 B1

Fig. 2

Fig. 3

12

Fig. 4

Figur 5